# EUROPEAN PATENT APPLICATION

(11) **EP 2 705 748 A1**
(43) Date of publication of application: **12.03.2014**
(21) Application number: 13183929.2
(22) Date of filing: 11.09.2013
(51) Int. Cl.: A01K 11/00

(54) **Injection molded plastic animal identification element to be arranged on a strap**

(30) Priority: 11.09.2012 NL 2009444
(71) Applicant: Nehls, Reinhard, 46399 Bocholt (DE)
(72) Inventor: Nehls, Reinhard, 46399 BOCHOLT (DE); Winkeler, Henrik, 53881 EUSKIRCHEN (DE)
(74) Representative: EP&C

(57) **Abstract**

An injection molded plastic identification element (1) adapted to be arranged on a strap (10) to be fitted around a part of an animal. The identification element has an injection molded plastic body with a front portion (2) provided with one or more visually readable identification indicia (3), wherein the plastic body further has at least one loop portion (6, 7, 8) that is integral with the front portion at the rear thereof and forms a strap passage through which the strap can be passed when arranging the identification element on the strap.

The injection molded plastic body is made from a laser markable plastic material, the one or more identification indicia being made by laser marking. A grip enhancing member (12) is embedded in the molded plastic body, said grip enhancing member having a grip increasing gripping surface (13), which grip enhancing member is arranged and construed to grip onto the strap when passed through the one or more strap passages of the plastic body.

## Description

The present invention relates to an injection molded plastic animal identification element adapted to be arranged on a strap that is to be fitted around a part of an animal, e.g. around the neck or a lower limb of the animal.

It is known to arrange an identification strap around the neck of cattle, e.g. cows, or other animals, the strap being provided with a series of plastic animal identification elements. Each element bears one visually readable digit between 0 and 9 so that the series of elements form an easily readable identification number, e.g. 109 by using three elements on the strap with the appropriate digit on each of them. In the field such elements are sometimes referred to as "neck strap digits".

In known embodiments the identification element has an injection molded plastic body with a front portion that is provided with a single digit.
The plastic body further has a loop portion that is integral with the front portion at the rear thereof and forms a strap passage through which the strap can be passed when arranging the identification element on the strap.
In one known embodiment the body has a single loop which forms a continuous tunnel from one side of the element to the opposite side, through which tunnel the strap is passed. In another known embodiment the body has two loop portions, each near one side of the element, and a central rib. The strap passes through the passage formed by one loop, then passes over the central rib, and then passes through the passage formed by the other loop. So the strap is basically woven through the element.

In the known embodiments the digit is made as an insert in the molded identification element. The digit is molded from hard plastic material and then the molded digit is placed in the mold for the identification element, which is also molded of hard plastic yet in a contrasting color compared to the digit.

The known embodiments of the identification element are not entirely satisfactory. In practical use the arrangement of elements on the strap is easy for the continuous tunnel version but more difficult for the central rib version. Yet the latter stays in place better on the strap. Additionally the manufacturing process is seen as relatively complex.

It is an object of the present invention to provide an improved injection molded plastic animal identification element and associated manufacturing method, as well as an animal identification strap assembly including one or more of such elements.

The present invention provides an injection molded plastic identification element adapted to be arranged on a strap to be fitted around a part of an animal, e.g. the neck or a lower limb of the animal, according to the preamble of claim 1, which is **characterized in that** the injection molded plastic body is made from a laser markable plastic material, the one or more identification indicia being made by laser marking, and in that a grip enhancing member is embedded in the molded plastic body, said grip enhancing member having a grip enhancing gripping surface, e.g. including at least one gripping tooth, which grip enhancing member is arranged and construed to grip onto the strap when passed through the one or more strap passages of the plastic body.

The invention thus proposes a different manufacturing method compared to the prior art for such identification elements, wherein the indicia (e.g. the single digit) is provided by laser marking directly onto the body made from laser markable plastic material. Also the invention proposes to embed a grip enhancing member in the plastic body to enhance the grip on the strap. As in practice often a series of identification elements is arranged on a strap to form a multiple digits number (each element having a single digit) the grip enhancing member ensures that the elements stay in place on the strap closely adjacent one another.

The laser markable plastic material preferably is soft plastic material, e.g. a polyurethane material.

Preferably the grip enhancing member is harder than the molded plastic body, e.g. the grip enhancing member being made of hard nylon, or of a reinforced plastic material, a metal, ceramic material, etc.

The invention allows for a relatively soft body compared to existing identification elements that are all made completely of hard plastic. The softness may be advantageous in view of contact with the animal body. The softness and resulting flexibility also allows for a resilient mounting of the relative hard gripping member, which enhances the gripping action thereof. The flexibility also facilitates the threading of the strap through the element.

The invention also relates to an animal identification strap assembly, said assembly comprising:
- a strap to be fitted around a part of an animal, e.g. the neck or a lower limb of the animal;
- at least one injection molded plastic identification element adapted to be arranged on the strap.

The invention also relates to a method for the manufacturing of an injection molded plastic identification element adapted to be arranged on a strap to be fitted around a part of an animal, e.g. the neck or a lower limb of the animal, wherein the identification element has an injection molded plastic body with a front portion provided with one or more visually readable identification indicia, wherein the plastic body further has at least one loop portion that is integral with the front portion at the rear thereof and forms a strap passage through which the strap can be passed when arranging the identification element on the strap.

The method is **characterized in that**:
- at least one grip enhancing member having a grip increasing gripping surface, e.g. including at least one gripping tooth, is provided, e.g. molded from plastic material,
- the plastic body is molded from a laser markable plastic material, the grip enhancing member being embedded in the molded plastic body during the injection molding thereof so as to grip onto the strap when passed through the one or more strap passages of the plastic body,
- the one or more identification indicia are made by laser marking on the injection molded plastic body with the embedded grip enhancing member.

In an embodiment, as is preferred, the injection molded plastic body has a hardness in a range of Shore A92 to Shore D70. As is preferred the grip enhancing member has a greater hardness than the plastic body.

In an embodiment it is envisaged that the element has a grip enhancing member that is embedded in the loop portion. This allows to use the flexible loop portion as a resilient support for the grip enhancing member, e.g. to maintain the grip onto the strap over time and/or to facilitate the arrangement of the element onto the strap.

One can envisage an embodiment with only a single grip enhancing member embedded in the body, e.g. in the loop portion, but one can also envisage the provision of multiple grip enhancing members in a single body. For example one can envisage an embodiment wherein multiple loop portions are present, each having an embedded grip enhancing member. Or, for example, the provision of a grip enhancing member in the front portion of the body, with the grip surface at the rear thereof. Or one can envisage the provision of generally opposed pairs of grip enhancing members, acting on opposed sides of the strap, e.g. one in the front portion and one in a loop portion.

The grip surface may form one or more distinct teeth, as is preferred. As an alternative, or in combination therewith, one can also envisage that the grip surface has a relief formed by ribs, studs, other protruding formations, or by another grip enhancing surface structure in general.

In an embodiment the grip enhancing member is embedded in the loop portion at a position facing the front portion of the plastic body, e.g. with one or more teeth protruding towards the front portion.

Preferably the grip enhancing member is positioned such that one or more grip enhancing formations thereof, e.g. one or more protrusions, e.g. a tooth, extend within the strap passage so that upon passing the strap through the passage the strap presses against the one or more formations and resilient action of the body of the element causes said formations to properly engage on the strap.

In an embodiment a central loop portion is arranged centrally on the rear of the front portion and a side loop portion is arranged at either side of the central loop portion with a gap between adjacent loop portions. This e.g. allows for optimal resilient action of the central loop, e.g. advantageous in an embodiment wherein said central loop portion is provided with a grip enhancing formation, preferably directed towards the front portion.
In an embodiment the central loop portion is provided with the grip enhancing member and the side loop portions are embodied without grip enhancing member.

In an embodiment the grip enhancing member is a member having one or more teeth.

It is preferred for the front portion to be embodied as a plate portion with a planar front area, more preferably with a thickened rim surrounding the planar front area and protruding in front of said planar front area thereby protecting the laser written identification indicia from wear.

In an embodiment, as in the known designs, the front portion is substantially rectangular.

In an embodiment, as in the known designs, the visually readable identification indicia is a single digit number having a height of at least 25 millimeter, e.g. between 25 and 50 millimeters.

In an embodiment one can envisage that an electronic transponder is embedded in the plastic body, e.g. containing identification data and/or other data.

As regards production technology and cost price the present invention offers the possibility to prepare a stock of molded elements without the indicia being provided by laser marking. Upon order from a customer the elements can then be laser marked in a laser marking device, with the indicia being tailored to the specific order, e.g. including a logo in addition to the digit or otherwise. This approach also allows to make elements with a wide variety of indicia without relevant additional costs.

The invention will now be described in more detail with reference to the drawings. In the drawings:
Fig. 1 shows an example of an identification element according to the invention in perspective view from the front,
Fig. 2 the element of figure 1 from the rear,
Fig. 3 an axial cross-section of the element of figure 1,
Fig. 4 a side view of the element of figure 1,
Fig. 5 another side view of the element of figure 5,
Fig. 6 an example of an animal neck strap onto which a series of element of figure 1 can be arranged.

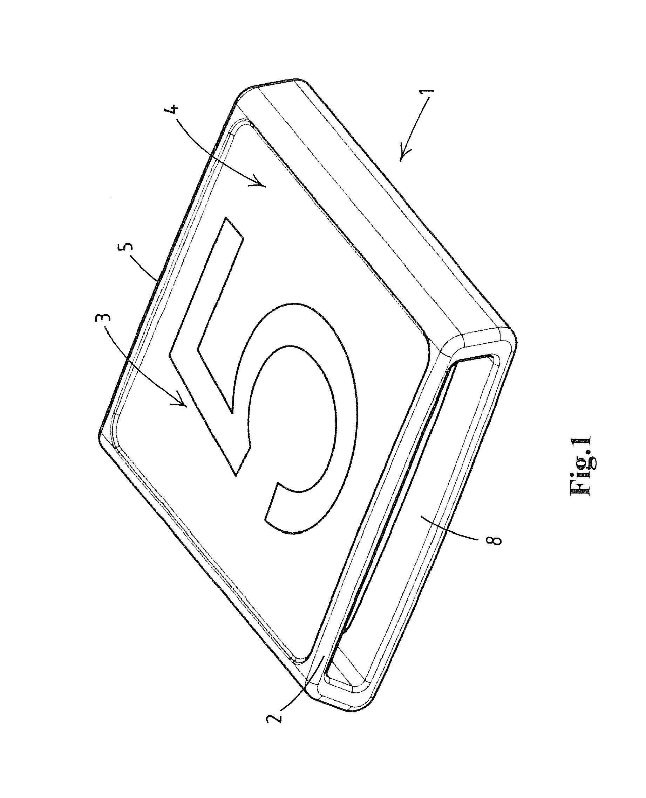

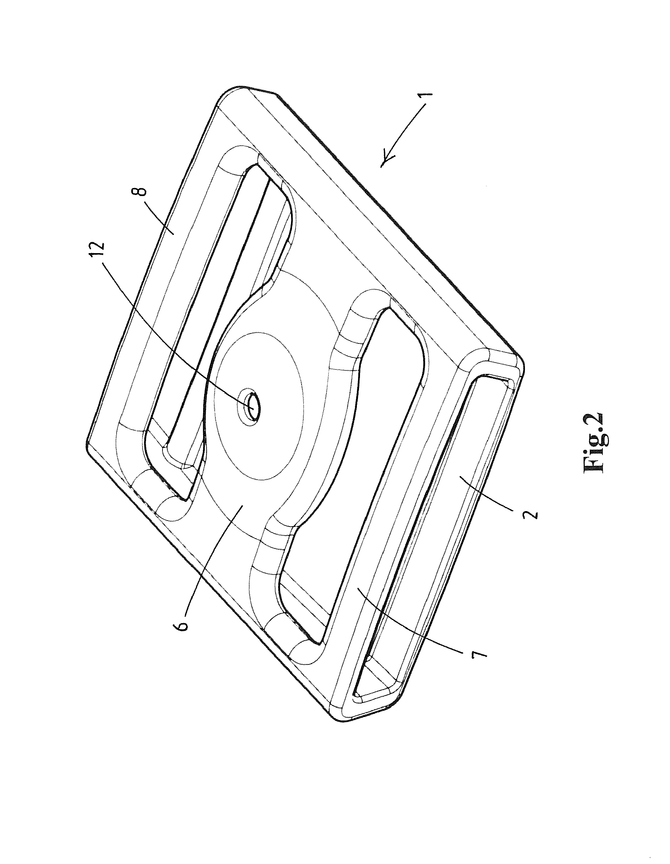

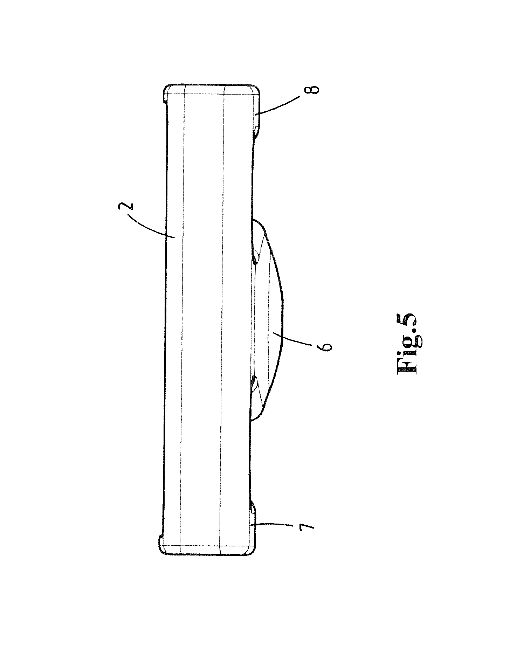

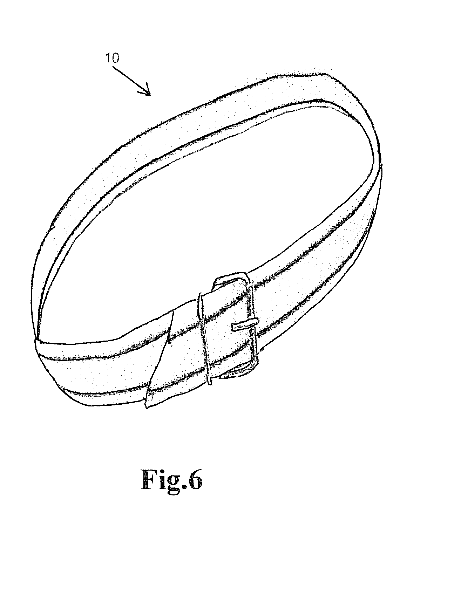

With reference to figures 1 - 5 now an example of an injection molded plastic identification element 1 adapted to be arranged on a strap 10 (see fig. 6) to be fitted around a part of an animal, e.g. the neck or a lower limb of the animal, will be described

In the example shown here, and as is seen as relevant application of the invention, an element 1 bears one visually readable digit between 0 and 9 so that the series of elements form an easily readable identification number. Other versions and animal strap applications are also possible.

The identification element 1 has an injection molded plastic body, that is molded from a laser markable plastic material, e.g. a polyurethane material with one or more agents that allow for effective laser marking. For example the injection molded plastic body has a hardness in a range of Shore A92 to Shore D70.

The body, as is preferred, is a unitary, monolithic body which reduces manufacturing costs and increases stability compared to multi-component bodies.

The body has a front portion 2 that is provided with one or more visually readable identification indicia 3, in a practical embodied as single digit as shown here. The digit has been made by laser marking the plastic material of the body.

The example illustrates that the front portion 2 is a plate portion with a planar front area 4. A thickened rim 5 surrounds the planar front area 4 and protrudes in front of the planar front area 4 thereby protecting the laser written identification indicia 3 from wear.

The front portion 2 is substantially rectangular in front view, but other contour shapes are possible as well.

As is preferred visually readable identification indicia is a single digit number having a height of at least 25 millimeter.

The plastic body further has - at the rear of the front portion - a central loop portion 6 which is arranged centrally on the rear of the front portion 2. Furthermore side loop portions 7, 8 are arranged at either side of the central loop portion 6 with a gap between adjacent loop portions. The loop portions 6, 7, 8 form aligned passages for the strap 10, the width of the passages being adapted to accommodate the width of the strap, e.g. between 30 and 50 millimeters for neck straps of cattle, e.g. cows, e.g. adapted for 40 mm width straps.

For example the strap 10 is a woven or leather strap.

It is envisaged that the strap 10 is introduced into the passage defined by a first side loop portion 7, then in the passage defined by the central loop portion 6, and then in the passage defined by side loop portion 8. As explained, in another embodiment one may envisage a structure at the rear that requires the strap to be "woven" through the plastic body.

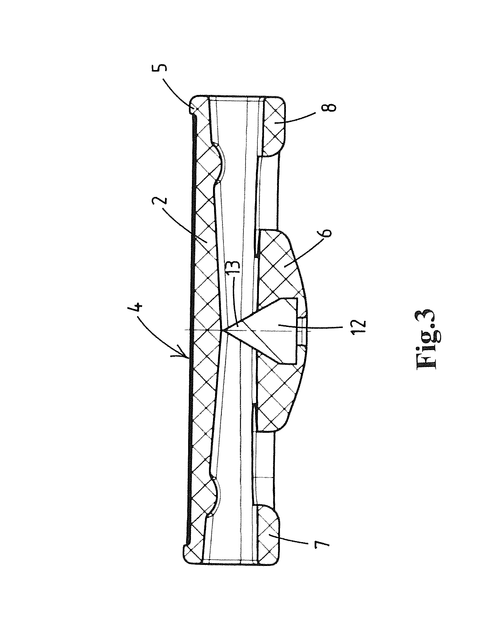

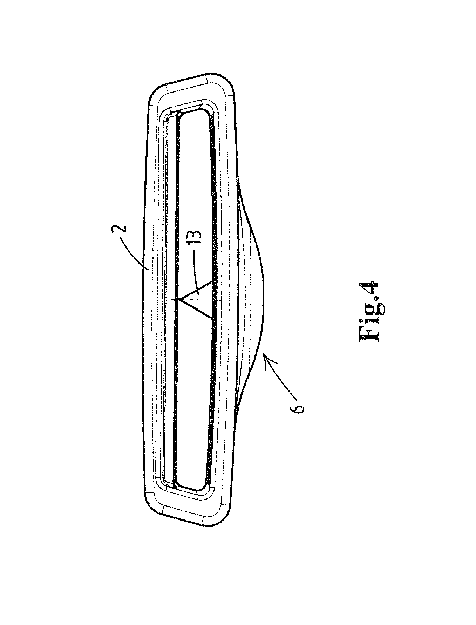

As can best be seen in figures 3 and 4, the central loop portion 6 is provided with the grip enhancing member 12. In this example the side loop portions 7, 8 are embodied without grip enhancing member. As explained a multitude of alternative arrangement of grip enhancing members and their design is possible as well, but this version is considered simple and effective.

The grip enhancing member is embedded in the molded plastic body, preferably during the injection molding of the plastic body so as to obtain an optimal adherence and integration. In other approaches the member 12 can be assembled later into the molded body, e.g. secured in a cavity thereof, e.g. using an adhesive.

The grip enhancing member 12 has a grip increasing gripping surface, here including one gripping tooth 13. The grip enhancing member is arranged and construed to grip onto the strap when passed through the one or more strap passages of the plastic body. For example the grip enhancing member is made of hard plastic material, harder than the material of the plastic body, e.g. made of hard nylon, reinforced plastic, etc.

As can be seen the grip enhancing member 12 is embedded in the central loop portion 6, with the tooth 13 protruding into the strap passage towards the front portion 2 of the plastic body.

When introducing the strap into the series of strap passages, the resiliency of the loop portion 6, which here acts like a resilient bridge over the passage, facilitates the passage of the strap. The same resilient behavior later ensures that the tooth 13 remains in contact with the strap 10 and so ensures that the element 1 stays in place on the strap 10.

The presence of the side loops 7, 8 allows for an attractive design of the mold for the plastic body as oppositely arranged sliding core elements can be employed to form the rear side of the front portion 2, and the inner faces of the loop portions 6, 7, 8.

## Claims

1. Injection molded plastic identification element (1) adapted to be arranged on a strap (10) to be fitted around a part of an animal, e.g. the neck or a lower limb of the animal,
wherein the identification element has an injection molded plastic body with a front portion (2) provided with one or more visually readable identification indicia (3), wherein the plastic body further has at least one loop portion (6,7,8) that is integral with the front portion at the rear thereof and forms a strap passage through which the strap can be passed when arranging the identification element on the strap,
**characterized in that**
the injection molded plastic body is made from a laser markable plastic material, the one or more identification indicia (3) being made by laser marking,
and **in that** a grip enhancing member (12) is embedded in the molded plastic body, said grip enhancing member having a grip enhancing gripping surface (13), e.g. including at least one gripping tooth, which grip enhancing member is arranged and construed to grip onto the strap (10) when passed through the one or more strap passages of the plastic body.

2. Identification element according to claim 1, wherein the grip enhancing member is harder than the molded plastic body, for example of hard plastic material, harder than the molded plastic body, and wherein, preferably, the grip enhancing member (12) is a member having one or more protrusions, e.g. one or more teeth (13), extending within the strap passage so that upon passing the strap through the passage the strap presses against the one or more protrusions and a resilient action of the molded plastic body of the element causes said protrusions to properly engage on the strap.

3. Identification element according to claim 1 or 2, wherein the element has a grip enhancing member (12) that is embedded in a loop portion of the plastic body.

4. Identification element according to one or more of claims 1 - 3, wherein the grip enhancing member (12) is embedded in a loop portion (6) at a position facing the front portion (2) of the plastic body.

5. Identification element according to claim 4, wherein the grip enhancing member (12) has one or more teeth protruding from the loop portion (6) towards the front portion of the element, said one or more teeth extending within the strap passage so that upon passing the strap through the passage the strap presses against the one or more teeth and a resilient action of the loop causes said one or more teeth to properly engage on the strap.

6. Identification element according to one or more of the preceding claims, wherein a central loop portion (6) is arranged centrally on the rear of the front portion and wherein a side loop portion (7,8) is arranged at either side of the central loop portion with a gap between adjacent loop portions.

7. Identification element according to claim 6, wherein the central loop portion (6) is provided with the grip enhancing member (12) and wherein the side loop portions (7,8) are embodied without grip enhancing member.

8. Identification element according to one or more of the preceding claims, wherein the front portion (2) is a plate portion with a planar front area, preferably with a thickened rim (5) surrounding the planar front area (4) and protruding in front of said planar front area thereby protecting the laser written identification indicia (3) from wear.

9. Identification element according to one or more of the preceding claims, wherein the front portion (2) is substantially rectangular.

10. Identification element according to one or more of the preceding claims, wherein the visually readable identification indicia (3) is a single digit number having a height of at least 25 millimeter.

11. Identification element according to one or more of the preceding claims, where the injection molded plastic body has a hardness in a range of Shore A92 to Shore D70.

12. Identification element according to one or more of the preceding claims, wherein an electronic transponder is embedded in the plastic body.

13. Animal identification strap assembly, said assembly comprising:
- a strap (10) to be fitted around a part of an animal, e.g. the neck or a lower limb of the animal;
- at least one injection molded plastic identification element (1) according to one or more of the preceding claims and adapted to be arranged on the strap.

14. Animal identification strap assembly according to claim 13, wherein the strap is a woven strap (10) or a leather strap.

15. Method for manufacturing of an injection molded plastic identification element adapted to be arranged on a strap to be fitted around a part of an animal, e.g. the neck or a lower limb of the animal,
wherein the identification element has an injection molded plastic body with a front portion provided with one or more visually readable identification indicia, wherein the plastic body further has at least one loop portion that is integral with the front portion at the rear thereof and forms a strap passage through which the strap can be passed when arranging the identification element on the strap,
**characterized in that**
- a grip enhancing member (12) having a grip enhancing gripping surface, e.g. including at least one gripping tooth (13), is provided, e.g. molded from a hard plastic material,
- the plastic body is molded from a laser markable plastic material, the grip enhancing member being embedded in the injection molded plastic body during the injection molding thereof so as to grip onto the strap when passed through the one or more strap passages of the plastic body,
- the one or more identification indicia (3) are made by laser marking on the injection molded plastic body with the embedded grip enhancing member.
